# EUROPEAN PATENT APPLICATION

(11) **EP 4 837 842 A1**
(43) Date of publication of application: **11.11.2026**
(21) Application number: 26152406.0
(22) Date of filing: 16.01.2026
(51) Int. Cl.: B64F 5/10, B64F 5/40, B64F 1/22, B64C 25/32, B66F 3/00, F16C 11/06

(54) **METHODS AND DEVICES TO SHORE AN AIRCRAFT ALONG A LONGITUDINAL CENTERLINE OF THE AIRCRAFT**

(30) Priority: 06.05.2025 US 202519199787
(71) Applicant: The Boeing Company, Arlington, VA 22202 (US)
(72) Inventor: MEBOE, Jared Alexander, Arlington, VA 22202 (US); SCHMIDT, Matthew Phillip, Arlington, VA 22202 (US); KRIEG, Andrew Alan, Arlington, VA 22202 (US); STINE, Joseph E,. IV, Arlington, VA 22202 (US)
(74) Representative: St Clair Jones, Gregory Arthur Langley

(57) **Abstract**

Devices and methods to shore an aft end of an aircraft at a tail skid assembly. The shoring is performed using a shoring assembly. The shoring assembly includes a brace with a first end configured to connect to the aircraft at a longitudinal centerline of the aircraft. One method of shoring the aft end of the aircraft includes connecting the shoring assembly to a tail skid assembly of the aircraft with the connection located at a longitudinal centerline of the aircraft, and supporting an aft end of the aircraft with the shoring assembly without applying a twisting force to the aircraft.

## Description

### TECHNOLOGICAL FIELD

The present disclosure relates generally to the field of shoring an aircraft and, more specifically, to shoring an aircraft along a longitudinal centerline of the aircraft.

### BACKGROUND

Aircraft shoring includes applying loads at prescribed locations on the structure to reduce or control the internal loads of the structure at one or more given points of interest. Jacking is the process of lifting, leveling, and stabilizing an airplane. Shoring is the process of applying external loads to an airplane to reduce internal loads within the airframe structure at a given point of interest. Shoring is performed to prepare the aircraft for work or rework and often requires carefully considered and engineered load application to properly balance and unload internal forces within the airframe. Historically this shoring has been accomplished through various cradles, engineered jack points, applying loads through additional beams, and various other structure introduced for imparting external loads which can reduce the internal forces.

One current method of aircraft shoring includes an aft-body jack that is applied at a jack point located along a lateral section of the fuselage. However, the eccentricity of the jack point forces torsion into the airframe which increases the complexity of the repair and may require additional shoring supports to mitigate/counteract the torsion.

Multiple horizontal stabilizer cradles have been employed which eliminates the eccentricity issue inherent with an offset jack location. However, the horizontal stabilizer cradles have relatively low load capacity which reduces their effectiveness. Further, these cradles require attention to balance the load on each side of the stabilizer to alleviate torsion within the fuselage. These loading requirements increase the complexity of the work and risks of additional complications.

Horizontal stabilizer clevis supports have capability limitations similar to horizontal stabilizer cradles. Further, to utilize the clevis supports, the horizontal stabilizers are required to be removed. This reduces weight and increases the effectiveness of the applied loads but increases the complexity of the work.

Some examples have used a shoring stand positioned in the auxiliary power unit (APU) bay cavity. This mitigates eccentricity issues of other methods, but this method requires the removal of the APU which can add other complications. This method can also require retesting. The relatively low load capability of the area generally requires the removal of additional large structures to increase the effectiveness of the load application.

Aft pressure bulkhead shoring cradles are another shoring method that has been used on aircraft. This fuselage body location has a moderate load capability and does not contribute to the torsion issues. However, the location of this bulkhead is forward of the jack point which reduces the effectiveness for unloading the aircraft aft section. This method by itself is often not sufficient to adequately unload areas of interest for repair.

### SUMMARY

One aspect is directed to a method of shoring an aft end of an aircraft. The method comprises connecting a shoring assembly to a tail skid assembly of the aircraft with the connection located at a longitudinal centerline of the aircraft; and applying a shoring load to the aft end of the aircraft with the shoring assembly without applying a twisting force to the aircraft.

In another aspect, the method further comprises connecting the shoring assembly to the aircraft at a point that is away from a jack point on the aircraft.

In another aspect, the method further comprises connecting the shoring assembly to the aircraft at a point that is aft of an aft fuselage bulkhead of the aircraft.

In another aspect, the method further comprises directly connecting the shoring assembly to the tail skid assembly.

In another aspect, connecting the shoring assembly to the tail skid assembly comprises connecting a brace of the shoring assembly to a bracket of the tail skid assembly.

In another aspect, the method further comprises removing a tail skid and a cartridge assembly of the tail skid assembly from the aircraft prior to connecting the brace to the bracket.

In another aspect, the method further comprises extending the shoring assembly through an opening in the skin of the aircraft, and connecting the shoring assembly to the tail skid assembly at a point that is within the skin of the aircraft.

In another aspect, the method further comprises jacking the brace upward relative to a support surface while the brace is connected to the bracket.

One aspect is directed to a method of shoring an aft end of an aircraft. The method comprises: connecting a brace to a bracket of a tail skid assembly with the bracket connected to an airframe of the aircraft at a longitudinal centerline of the aircraft; and shoring the aircraft with the brace and unloading the airframe, tail section, and fuselage without inducing secondary loads into the airframe.

In another aspect, the method further comprises connecting a first end of the brace to the bracket with the first end positioned within a skin of the aircraft.

In another aspect, the method further comprises positioning a second end of the brace towards a support surface.

In another aspect, the method further comprises jacking the brace upward from a support surface while the brace is connected to the bracket.

In another aspect, the method further comprises positioning connectors on the brace away from the airframe with the connectors extending through and connecting together sections of the brace.

In another aspect, the method further comprises detaching the tail skid assembly from the aircraft prior to connecting the brace to the bracket.

In another aspect, the method further comprises connecting the brace to the bracket while the tail skid assembly is connected to the bracket.

In another aspect, the method further comprises fitting a first end of the brace within a gap formed between lugs of the bracket, and inserting a connector through the brace and the lugs and connecting the brace to the bracket.

In another aspect, the method further comprises connecting the brace to the bracket and positioning the brace away from a jack point on the aircraft, the jack point positioned away from the longitudinal centerline of the aircraft.

One aspect is directed to a shoring assembly to shore an aft end of an aircraft. The shoring assembly comprises a brace comprising a first end configured to connect to the aircraft at a longitudinal centerline of the aircraft, a second end, and an opening that extends through the brace at the first end and is sized to receive a connector to connect the brace to the aircraft. A bearing is mounted in the opening. A support member is mounted to the second end of the brace with the support member configured to engage with a support surface.

In another aspect, the shoring assembly comprises a bracket that mounts to an airframe of the aircraft at the longitudinal centerline of the aircraft with the first end of the brace connected to the bracket at the longitudinal centerline.

In another aspect, the bearing is a spherical bearing.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a side view an aircraft.
Figure 2 is a side view of a tail skid assembly mounted at an aft end of an aircraft.
Figure 3 is a bottom view of the tail skid assembly of Figure 2 that is mounted at the aft end of the aircraft.
Figure 4 is a schematic side view of a tail skid assembly mounted to an airframe of an aircraft and positioned at an aft end of the aircraft.
Figure 5 is a schematic diagram of a shoring assembly that is connected to an aircraft.
Figure 6 is an isometric view of a brace of a shoring assembly.
Figure 7 is an isometric view of a first end of a brace of a shoring assembly mounted to a bracket within an interior of an aircraft.
Figure 8 is a flowchart diagram of a method of shoring an aft end of an aircraft.
Figure 9 is a flowchart diagram of a method of shoring an aft end of an aircraft.

### DETAILED DESCRIPTION

The present application is directed to methods and devices for applying a large upward force at a specific location of an aircraft to create a specific desired effect, such as shoring the aircraft to unload an area of interest. This is different than prior methods that are designed to merely hold and/or stabilize the aircraft and are particularly designed to prevent the aircraft from tipping.

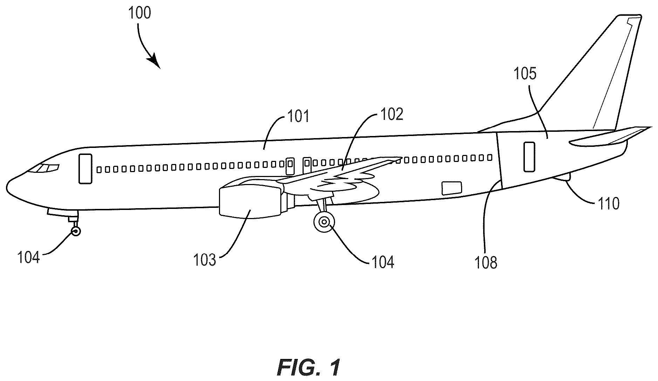

Figure 1 illustrates an aircraft 100 that includes a fuselage 101 configured to transport passengers and/or cargo. Wings 102 extend outward from the fuselage 101 and support engines 103 that propel the aircraft during flight. Landing gear 104 is mounted on the underside of the fuselage 101. A tail section 105 is positioned at the aft end of the fuselage 101. In some examples, an aft fuselage bulkhead 108 extends between the fuselage 101 and the tail section 105.

A tail skid assembly 110 extends outward from an underside of the tail section 105. The tail skid assembly 110 absorbs the impact to prevent damage if the tail section 105 inadvertently contacts against the runway such as during landing or take off. In some examples, the tail skid assembly 110 has a fixed configuration, with other examples having a retractable configuration.

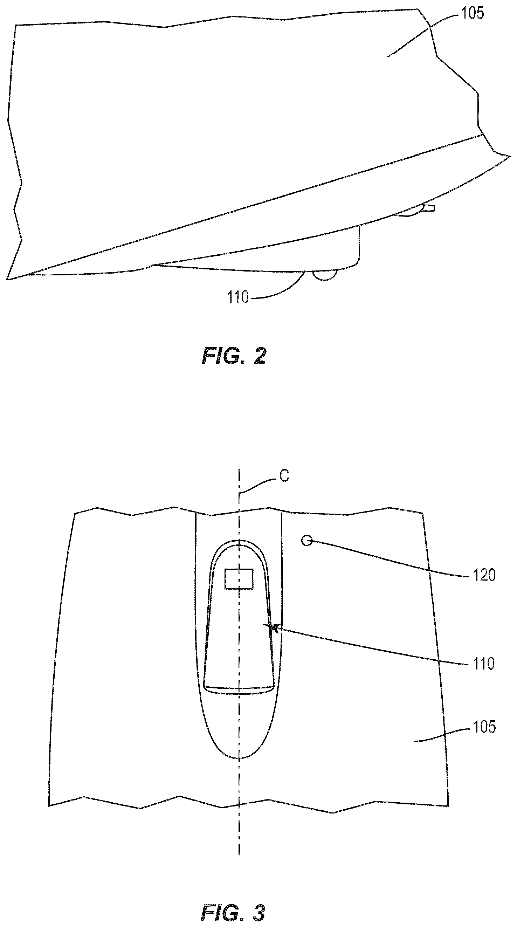

Figure 2 illustrates a close-up view of the tail skid assembly 110 that extends outward beyond the bottom side of the tail section 105. Figure 3 illustrates a view of the tail skid assembly 110 from below the aircraft 100. The tail skid assembly 110 is aligned along a longitudinal centerline C of the fuselage 101 (referred to as the buttock line 0.0). A jack point 120 is positioned on the bottom side of the tail section 105. The jack point 120 is connected to the airframe of the aircraft 100 and provides a mount for a jack to lift and/or support the tail section, such as during maintenance work. The jack point 120 is offset from the longitudinal centerline C.

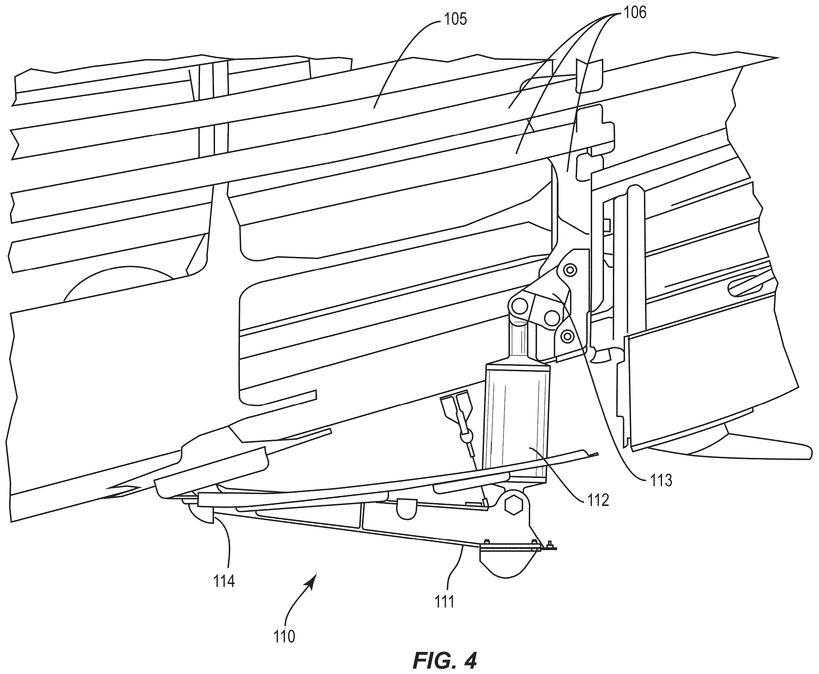

Figure 4 illustrates the tail skid assembly 110 mounted to the airframe 106 in the tail section 105. The tail skid assembly 110 includes a tail skid 111, cartridge assembly 112, and a bracket 113. The tail skid 111 is pivotally mounted at a forward end 114 to the tail section 105 and at an aft end to the cartridge assembly 112. The cartridge assembly 112 is connected to the tail skid 111 and the bracket 113. In the event the tail skid 111 contacts the runway, the tail skid 111 pivots inward with the cartridge assembly 112 absorbing a portion of the force. The bracket 113 is located on the longitudinal centerline C and is connected to the airframe 106. The airframe 106 is the basic structural framework of the aircraft 100 and includes structural elements within the fuselage 101, wings 102, tail section 105, and landing gear 104.

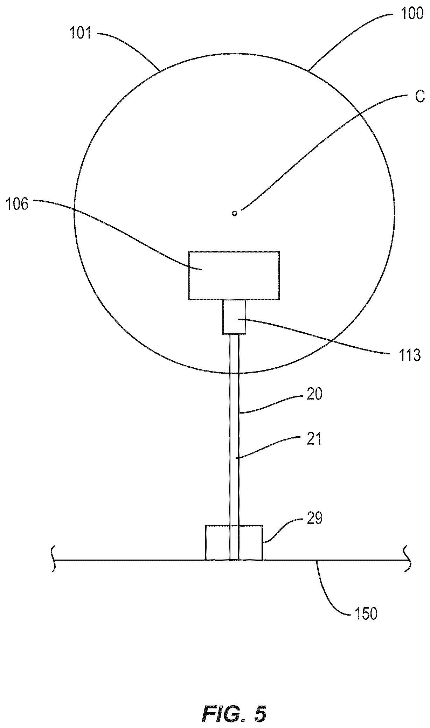

The bracket 113 provides a connection point for shoring the aircraft 100. The shoring applies external loads at prescribed locations to reduce or control the internal loads of the aircraft structure at a given point of interest. Figure 5 illustrates a shoring assembly 20 connected to the bracket 113 and shoring the aft section of the aircraft 100. The shoring assembly 20 connects to the bracket 113 on the longitudinal centerline C so there is no torque or rotational force applied to the fuselage 101. The shoring assembly 20 is positioned on a support surface 150 that can include various structures such as but not limited to a runway, floor of a manufacturing facility, floor of a maintenance area at an airport, and the ground.

In some examples, the tail skid assembly 110 is removed from the bracket 113 prior to connection of the shoring assembly 20. In some examples this includes completely removing the tail skid assembly 110 from the aircraft 100. In other examples, the tail skid assembly 110 remains connected to the aircraft 100 and the cartridge assembly 112 is removed from the bracket 113 to enable connection with the shoring assembly 20. In still other examples, the shoring assembly 20 is connected to the bracket 113 concurrently with the cartridge assembly 112 of the tail skid assembly 110 (which remains connected to the aircraft 100).

The shoring assembly 20 extends between the bracket 113 and the support surface 150. The shoring assembly 20 includes a brace 21 that is constructed from one or more sections. In some examples, the shoring assembly 20 includes just the brace 21. In other examples, the shoring assembly 20 includes one or more support members 29 that support and position the brace 21. One example of a support member 29 is a jack to adjust the position of the brace 21 above the support surface 150. Examples of jacks include but are not limited to a tail jack, field jack, and production jack. Another example of a support member 29 is a stand with multiple legs that support the brace 21 on the support surface 150 and prevent it from tipping or otherwise falling over.

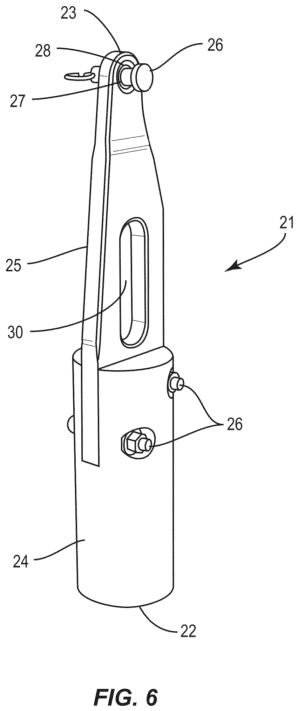

Figure 6 illustrates a brace 21 that has an elongated shape with a bottom end 22 and a top end 23. The brace 21 has a substantially straight shape. In some examples, the brace 21 has a unitary, one-piece construction. In other examples, the brace 21 is constructed from two or more sections that are connected together. One example as shown in Figure 6 includes a two piece construction with a first section 24 and a second section 25 that are connected together by one or more mechanical connectors 26. An opening 27 extends through the brace 21 at the top end 23. A connector 26 is sized to extend through the opening 27 to connect to the bracket 113. The brace 21 can be constructed from a variety of different materials. Examples include but are not limited to aluminum, steel, and various metal alloys. Mechanical connectors 26 can include a variety of different styles and configurations with examples including but not limited to bolts/nuts, rivets, pins, shafts, and dowels. In one specific example, the connector 26 that connects the brace 21 to the bracket 113 is a shaft that is secured by a low-profile pin.

In some examples, a bearing 28 is positioned in the opening 27 in the brace 21. The bearing 28 constrains relative motion to desired directions along the longitudinal centerline C. In one specific example, the bearing 28 is a spherical bearing with a maximum swivel angle of substantially 17. The bearing 28 provides for supporting the aft body of the aircraft 100 without applying torsion or lateral force to the airframe. In some examples, the brace 21 is constructed to accommodate out-of-plane loading such as lateral loads. One example includes a construction capable of withstanding a 250 lbf lateral load.

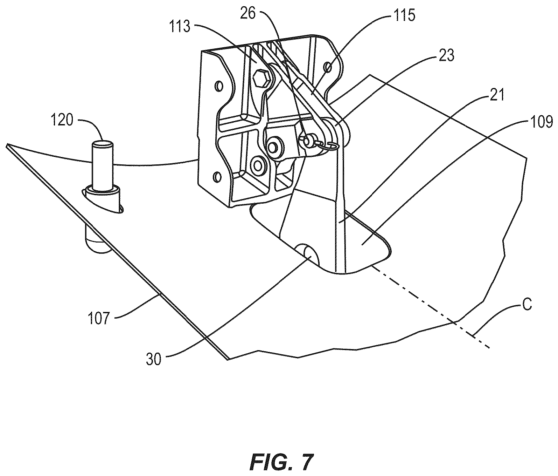

Figure 7 illustrates the brace 21 connected to the bracket 113. In this example, the bracket 113 includes a pair of lugs that are spaced apart by a gap 115. The top end 23 of the brace 21 is positioned in the gap 115. A connector 26 extends through the bracket 113 and lugs to secure the brace 21 to the bracket 113. This connection is a direct interface between the brace 21 and the bracket 113. As illustrated, the brace 21 is positioned on the longitudinal centerline C when connected to the bracket 113. This enables the shoring assembly 20 to apply a shoring load to the aircraft 100 through the airframe 106 without introducing torsional forces.

In some examples as illustrated in Figures 6 and 7, the upper section of the brace 21 has a reduced sized to fit within an opening 109 in the skin 107 of the aircraft 100. The reduced size is formed by the upper section 25 having a substantially thin, flattened shape (as compared to the lower section 24 that has a substantially circular sectional shape). The upper section 25 also has a taper that narrows towards the top end 23. This shape provides sufficient clearance for a technician to fit their hand into the opening 109 and/or between the brace 21 and the airframe 106 to allow access for installation and removal with the bracket 113. In some examples, the brace 21 includes an opening 30 in the interior to facilitate handling and positioning of the brace 21.

The connection of the shoring assembly 20 at the tail skid assembly 110 provides a number of advantages over prior solutions that include connections away from the longitudinal centerline C (such as a connection at the jack point 120). The shoring assembly 20 unloads the fuselage structure without inducing secondary loads into the aircraft 100. This connection eliminates the induced torsions within the airframe 106 that can occur when using an off-center mounting point (e.g., the jack point 120). The torsion within the structure complicates rework throughout the airframe 106. Further, this provides for the shoring assembly 20 to securely support the aircraft 100 as the torsion force would cause the shoring assembly to twist and/or fall. The center connection location also enables better efficiency in applying larger shoring loads than is available at offset locations to unload the airframe. In one example, loads of 12,000 lbf may be applied with no induced torsional loads. For rework on existing aircraft 100, the center connection provides for adequately shoring the aircraft 100 with the shoring assembly 20 while achieving load balance and an unloaded state for repair operations.

Another advantage of this connection is the elimination/reduction of additional shoring supports because of high load capacity of skid point and because torsion is not introduced to airframe 106. Also, the shoring assembly 20 can be used at various environments, such as within a manufacturing facility where the aircraft 100 is being built and out in the field for use on existing aircraft 100.

The connection at the tail skid assembly 110 also provides for connection at an aft section of the aircraft 100. In some examples, this connection point is aft of the fuselage bulkhead 108 (see Figure 1). The location of the connection point at the aft end of the airframe 106 is efficient to reduce fuselage bending moment because applied shoring loads have a longer moment arm to balance and unload moment generated by fuselage weight.

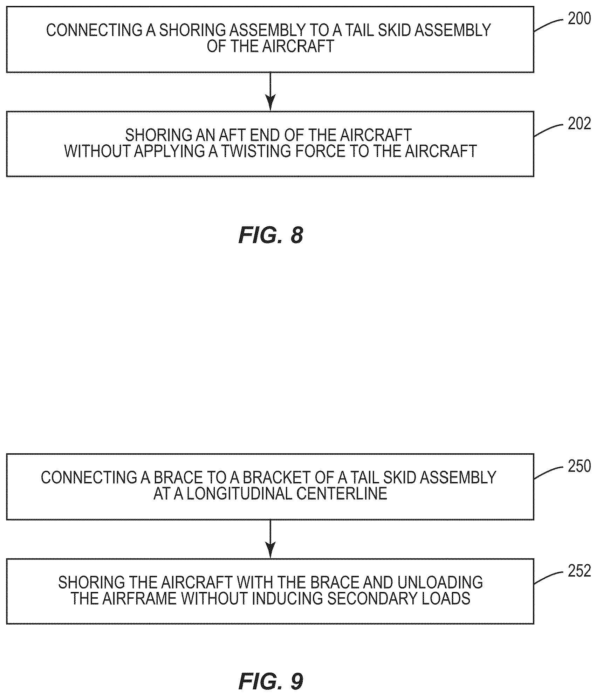

Figure 8 illustrates a method of shoring an aft end of an aircraft 100. The method includes connecting a shoring assembly 20 to a tail skid assembly 110 of the aircraft 100 (block 200). The connection between the shoring assembly 20 and the tail skid assembly 110 is at a longitudinal centerline C of the aircraft 100. The shoring assembly 20 shores the aft end of the aircraft 100 without applying a twisting force (block 202). In some examples, this connection is formed between a brace 21 of the shoring assembly 20 and a bracket 113 of the tail skid assembly 110.

Figure 9 illustrates another method of shoring an aft end of an aircraft 100. The method includes connecting a brace 21 to a bracket 113 of a tail skid assembly 110 (block 250). The bracket 113 is connected to an airframe 106 of the aircraft 100 at a longitudinal centerline C of the aircraft 100. The brace 21 shores the aircraft 100 and unloads the airframe 106 without inducing secondary loads into the airframe 106 (block 252).

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

The description includes the following clauses:
1. A method of shoring an aft end of an aircraft, the method comprising:
   connecting a shoring assembly to a tail skid assembly of the aircraft with the connection located at a longitudinal centerline C of the aircraft; and
   applying a shoring load to an aft end of the aircraft with the shoring assembly without applying a twisting force to the aircraft.
2. The method of clause 1, further comprising connecting the shoring assembly to the aircraft at a point that is away from a jack point on the aircraft.
3. The method of clause 1 or clause 2, further comprising connecting the shoring assembly to the aircraft at a point that is aft of an aft fuselage bulkhead of the aircraft.
4. The method of any of clauses 1 to 3, further comprising directly connecting the shoring assembly to the tail skid assembly.
5. The method of any of clauses 1 to 4, wherein connecting the shoring assembly to the tail skid assembly comprises connecting a brace of the shoring assembly to a bracket of the tail skid assembly.
6. The method of clause 5, further comprising removing a tail skid and a cartridge assembly of the tail skid assembly from the aircraft prior to connecting the brace to the bracket.
7. The method of any of clauses 1 to 6, further comprising:
   extending the shoring assembly through an opening in skin of the aircraft; and
   connecting the shoring assembly to the tail skid assembly at a point that is within the skin of the aircraft.
8. The method of any of clauses 1 to 7, further comprising jacking a brace upward relative to a support surface while the brace is connected to a bracket.
9. A method of shoring an aft end of an aircraft, the method comprising:
   connecting a brace to a bracket of a tail skid assembly with the bracket connected to an airframe of the aircraft at a longitudinal centerline C of the aircraft; and
   shoring the aircraft with the brace and unloading the airframe, tail section, and fuselage without inducing secondary loads into the airframe.
10. The method of clause 9, further comprising connecting a first end of the brace to the bracket with the first end positioned within a skin of the aircraft.
11. The method of clause 10, further comprising positioning a second end of the brace towards a support surface.
12. The method of any of clauses 9 to 11, further comprising jacking the brace upward from a support surface while the brace is connected to the bracket.
13. The method of any of clauses 9 to 12, further comprising positioning connectors on the brace away from the airframe with the connectors extending through and connecting together sections of the brace.
14. The method of any of clauses 9 to 13, further comprising detaching the tail skid assembly from the aircraft prior to connecting the brace to the bracket.
15. The method of any of clauses 9 to 14, further comprising connecting the brace to the bracket while the tail skid assembly is connected to the bracket.
16. The method of any of clauses 9 to 15, further comprising:
   fitting a first end of the brace within a gap formed between lugs of the bracket; and
   inserting a connector through the brace and the lugs and connecting the brace to the bracket.
17. The method of any of clauses 9 to 16, further comprising connecting the brace to the bracket and positioning the brace away from a jack point on the aircraft, the jack point positioned away from the longitudinal centerline C of the aircraft.
18. A shoring assembly to shore an aft end of an aircraft, the shoring assembly comprising:
   a brace comprising:
      a first end configured to connect to the aircraft at a longitudinal centerline C of the aircraft;
      a second end;
      an opening that extends through the brace at the first end, the opening sized to receive a connector to connect the brace to the aircraft;
   a bearing mounted in the opening; and
   a support member mounted to the second end of the brace, the support member configured to engage with a support surface.
19. The shoring assembly of clause 18, further comprising a bracket that mounts to an airframe of the aircraft at the longitudinal centerline C of the aircraft with the first end of the brace connected to the bracket at the longitudinal centerline C.
20. The shoring assembly of clause 18 or clause 19, wherein the bearing is a spherical bearing configured to restrict forces applied through the brace to predetermined directions.

## Claims

1. A method of shoring an aft end of an aircraft, the method comprising:
connecting a shoring assembly (20) to a tail skid assembly (110) of the aircraft with the connection located at a longitudinal centerline (C) of the aircraft; and
applying a shoring load to an aft end of the aircraft with the shoring assembly (20) without applying a twisting force to the aircraft.

2. The method of claim 1, further comprising connecting the shoring assembly (20) to the aircraft at a point that is away from a jack point (120) on the aircraft.

3. The method of claim 1 or claim 2, further comprising connecting the shoring assembly (20) to the aircraft at a point that is aft of an aft fuselage bulkhead (108) of the aircraft.

4. The method of any of claims 1 to 3, further comprising directly connecting the shoring assembly (20) to the tail skid assembly (110).

5. The method of any of claims 1 to 4, wherein connecting the shoring assembly (20) to the tail skid assembly (110) comprises connecting a brace (21) of the shoring assembly (20) to a bracket (113) of the tail skid assembly (110).

6. The method of claim 5, further comprising removing a tail skid (111) and a cartridge assembly (112) of the tail skid assembly (110) from the aircraft prior to connecting the brace (21) to the bracket (113).

7. The method of any of claims 1 to 6, further comprising:
extending the shoring assembly (20) through an opening (109) in skin (107) of the aircraft; and
connecting the shoring assembly (20) to the tail skid assembly (110) at a point that is within the skin (107) of the aircraft.

8. The method of any of claims 1 to 7, further comprising jacking a brace (21) upward relative to a support surface (150) while the brace (21) is connected to a bracket (113).

9. A method of shoring an aft end of an aircraft, the method comprising:
connecting a brace (21) to a bracket (113) of a tail skid assembly (110) with the bracket (113) connected to an airframe (106) of the aircraft at a longitudinal centerline (C) of the aircraft; and
shoring the aircraft with the brace (21) and unloading the airframe (106), tail section (105), and fuselage (101) without inducing secondary loads into the airframe (106).

10. The method of claim 9, further comprising connecting a first end of the brace (21) to the bracket (113) with the first end positioned within a skin (107) of the aircraft, optionally, further comprising positioning a second end of the brace (21) towards a support surface (150).

11. The method of claim 9 or claim 10, further comprising one or more of:
jacking the brace (21) upward from a support surface (150) while the brace (21) is connected to the bracket (113);
positioning connectors (26) on the brace (21) away from the airframe (106) with the connectors (26) extending through and connecting together sections of the brace (21);
detaching the tail skid assembly (110) from the aircraft prior to connecting the brace (21) to the bracket (113);
connecting the brace (21) to the bracket (113) while the tail skid assembly (110) is connected to the bracket (113); and/or
connecting the brace (21) to the bracket (113) and positioning the brace (21) away from a jack point (120) on the aircraft, the jack point (120) positioned away from the longitudinal centerline (C) of the aircraft.

12. The method of any of claims 9 to 11, further comprising:
fitting a first end (23) of the brace (21) within a gap (115) formed between lugs of the bracket (113); and
inserting a connector (26) through the brace (21) and the lugs and connecting the brace (21) to the bracket (113).

13. A shoring assembly to shore an aft end of an aircraft, the shoring assembly comprising:
a brace (21) comprising:
a first end (23) configured to connect to the aircraft at a longitudinal centerline (C) of the aircraft;
a second end (24);
an opening (27) that extends through the brace (21) at the first end, the opening sized to receive a connector to connect the brace to the aircraft;
a bearing (28) mounted in the opening (27); and
a support member (29) mounted to the second end of the brace (21), the support member (29) configured to engage with a support surface.

14. The shoring assembly (20 )of claim 13, further comprising a bracket (113) that mounts to an airframe of the aircraft at the longitudinal centerline (C) of the aircraft with the first end of the brace (21) connected to the bracket (113) at the longitudinal centerline (C).

15. The shoring assembly (20) of claim 13 or claim 14, wherein the bearing (28) is a spherical bearing configured to restrict forces applied through the brace to predetermined directions.
